# EUROPÄISCHE PATENTSCHRIFT

(11) **EP 4 431 707 B1**
(45) Veröffentlichungstag und Bekanntmachung des Hinweises auf die Patenterteilung: **02.09.2026**
(21) Anmeldenummer: 24161467.6
(22) Anmeldetag: 05.03.2024
(51) Int. Cl.: F01M 11/10

(54) **VERFAHREN ZUR ÜBERWACHUNG EINES SCHMIERSTOFFES EINES VERBRENNUNGSMOTORS**
METHOD FOR MONITORING A LUBRICANT OF AN INTERNAL COMBUSTION ENGINE
PROCÉDÉ DE SURVEILLANCE D'UN LUBRIFIANT D'UN MOTEUR À COMBUSTION INTERNE

(30) Priorität: 14.03.2023 DE 102023106324
(43) Veröffentlichungstag der Anmeldung: 18.09.2024
(73) Patentinhaber: Innio Jenbacher GmbH & Co OG, 6200 Jenbach (AT)
(72) Erfinder: HEMMANN, Moritz, 6020 Innsbruck (AT); WALL, Günther, 6323 Bad Häring (AT)
(74) Vertreter: Torggler & Hofmann Patentanwälte - Innsbruck

(56) Entgegenhaltungen:
- US-A1- 2002 178 780
- US-A1- 2007 074 562
- US-A1- 2017 102 308
- US-A1- 2021 231 634

## Beschreibung

Die vorliegende Erfindung betrifft ein Verfahren zur Überwachung eines Schmierstoffes eines Verbrennungsmotors mit den Merkmalen des Oberbegriffs des Anspruchs 1, einen Verbrennungsmotor mit den Merkmalen des Oberbegriffs des Anspruchs 13, sowie ein Computerprogrammprodukt und ein Datenträgersignal.

Um einen zuverlässigen Betrieb und eine lange Lebensdauer eines Verbrennungsmotors umsetzen zu können, ist es Voraussetzung, eine gewisse Schmierstoffqualität sicherzustellen, um eine Schmierung der beweglichen Teile eines Verbrennungsmotors garantieren zu können.

Im Allgemeinen ist ein als Schmierstoff dienendes Motoröl des Verbrennungsmotors während des laufenden Betriebs verschiedenen Beanspruchungen ausgesetzt, wodurch sich die Ölqualität verringert.

Eine solche Ölqualitätsverminderung tritt aufgrund einer Erschöpfung der Schmiermitteladditive auf, die spezifische Funktionen wie Viskositätssteuerung, Verschleiß, Alterung, Erhöhung der Schmierfähigkeit, Minimierung von Ablagerungen, Oxidationsverhinderungen und andere gewünschte Eigenschaften erfüllen.

Eine Qualitätsverminderung des Motoröls kann auch durch die Aufnahme von Fremdkörpern in das Motoröl, wie Schmutz aus der Umgebung, und Verschleißmaterialien aus dem Verbrennungsmotor, die als Teil des natürlichen Betriebsverfahrens auftreten, und Verbrennungsrückständen aus dem Verbrennungsvorgang auftreten.

Faktoren, welche die Ölqualität beeinflussen, sind der intensive und/oder lange Kontakt mit Verbrennungsgasen, der intensive und/oder lange Kontakt mit heißen und/oder großen Oberflächen, hohe Temperaturen oder der Kontakt mit katalytisch wirkenden Substanzen (wie beispielsweise Metallen wie Kupfer oder Eisen) im Verbrennungsmotor.

Bei Erreichen eines bestimmten unteren Qualitätsgrenzwertes muss das Motoröl getauscht werden.

Ein Zeitpunkt für einen Motorölwechsel kann in bestimmten Intervallen (beispielsweise durch Betriebsstunden oder nach Erreichen einer Zeitperiode, wie beispielsweise 5 Jahren) vorgegeben werden oder indem die Qualität des Motoröls kontinuierlich geprüft wird, wobei bei Erreichen bestimmter Qualitätsgrenzwerte der Motorölwechsel durchzuführen ist.

Ausschlaggebende Parameter für die Ölqualität sind dabei unter anderen der Eisengehalt, die Oxidationsrate oder auch der i-pH-Wert.

Substanzieller Aufwand und Kosten sind außerdem damit verbunden, die erhebliche Menge an Motoröl zu entsorgen und neu nachzufüllen (wobei bei stationären Brennkraftmaschinen mit Motorölmengen bis zu mehreren tausend Litern zu rechnen ist).

Es gilt daher, einen Weg zu finden, die Ölqualität möglichst aktuell und ausreichend genau zu bestimmen, um das Motoröl möglichst lange mit geringem Risiko verwenden zu können, bevor ein Ölwechsel (und die damit verbundenen Servicearbeiten) anfallen.

Aus dem Stand der Technik ist es daher bekannt, nach vorgegebenen Betriebsstundenzahlen des Verbrennungsmotors (also in einem vorgegebenen Ölprobenentnahmeintervall) Ölproben zu entnehmen, welche anschließend in einem Labor aufwändig bezüglich ihrer einzelnen Inhaltsstoffe analysiert werden und aufgrund der Analyse Aufschluss darüber gegeben werden kann, wie weit eine Alterung des Motoröls bereits fortgeschritten ist, wodurch sich ableiten lässt, ob das Motoröl weiterhin eingesetzt werden kann oder gewechselt werden soll. Eine solche Analyse geht beispielsweise aus der US 2016/0003794 A1 oder der US 2017/102308 A1 hervor. Nachteilig daran ist jedoch, dass - um eine ausreichende Betriebssicherheit garantieren zu können - relativ häufig Proben des Schmierstoffes aus dem Verbrennungsmotor entnommen werden müssen, welche unter hohem Arbeitsaufwand und komplexen Analysemethoden analysiert werden müssen.

Weitere Nachteile sind die diskontinuierliche Überwachung der Ölqualität und der sich aus dem Analyseverfahren ergebende Zeitverzug zwischen der Ölprobenentnahme bis zum Vorliegen der Analyseergebnisse.

Eine weitere Möglichkeit zur Überwachung eines Schmierstoffes und Schlussfolgerung hinsichtlich einer Ölqualität geht aus der Anwendung von speziellen Sensoren (wie beispielsweise durch die US 2009/0315574 A1 offenbart) hervor, welche direkt am Verbrennungsmotor platziert werden können. Diese Sensoren werden dazu angewandt, um über eine ermittelte elektro-chemische Zustandsgröße (beispielsweise die elektrische Leitfähigkeit) des Motoröls direkt auf eine Ölqualität rückzuschließen. Eine solche Anwendung ist beispielsweise durch die US 2020/0378283 A1 gezeigt.

Nachteilig am Einsatz entsprechender Sensoren ist jedoch, dass die Ölqualitätsbestimmung recht ungenau vonstattengeht, da die Messwerte des Sensors stark abhängig von Betriebsparametern des Verbrennungsmotors sind, wie beispielsweise die Öltemperatur oder die Belegung des Öls mit Fremdpartikel.

So kommt es bei der Messung durch entsprechende Sensoren zu starken Abweichungen von der tatsächlichen Ölqualität, wenn sich im Bereich des Sensors Ablagerungen bilden oder der Messbereich des Sensors durch entsprechende im Motoröl getragene Partikel während der Messung durchflossen wird.

Folglich ergibt sich aus dem Stand der Technik der Wunsch nach einer Möglichkeit, mittels welcher eine weniger aufwändige und dennoch möglichst zuverlässige Zustandsüberwachung eines Schmierstoffes eines Verbrennungsmotors vorgenommen werden kann.

Aufgabe der vorliegenden Erfindung ist es daher, die zuvor beschriebenen Nachteile des Standes der Technik zumindest teilweise zu verbessern und/oder ein Verfahren sowie einen Verbrennungsmotor bereitzustellen, mit Hilfe derer eine Überwachung eines Schmierstoffes des Verbrennungsmotors einfacher und/oder kostensparender und/oder mittels weniger Arbeitsaufwand durchgeführt werden kann.

Diese Aufgabe wird durch ein Verfahren zur Überwachung eines Schmierstoffes eines Verbrennungsmotors mit den Merkmalen des Anspruchs 1, einem Verbrennungsmotor mit wenigstens einem Ölkreislauf mit den Merkmalen des Anspruchs 13, einem Computerprogrammprodukt mit den Merkmalen des Anspruchs 14 sowie einem Datenträgersignal mit den Merkmalen des Anspruchs 15 gelöst.

Erfindungsgemäß ist vorgesehen, dass durch das Verfahren zur Überwachung eines Schmierstoffes eines Verbrennungsmotors, wobei numerische Messwerte mit wenigstens einem Sensor über eine Laufzeit eines Verbrennungsmotors erfasst werden, wobei die numerischen Messwerte repräsentativ für eine Ölqualität eines Motoröls des Verbrennungsmotors sind, dadurch gekennzeichnet, dass ein Ölprobenentnahmeintervall abhängig von zumindest einem numerischen Messwert und/oder einer daraus abgeleiteten Größe angepasst wird.

Durch das erfindungsgemäße Verfahren kann somit eine aufwändige und umfangreiche Analyse im Labor, welche genaue Aufschlüsse über eine Ölqualität liefert, besser eingeplant werden, indem im laufenden Betrieb des Verbrennungsmotors über wenigstens einen Sensor charakteristische numerische Messwerte für die Ölqualität des Motoröls entnommen werden, welche zwar eine unvollständige Form der Ölqualitätsmessung im Vergleich zu einer in einem spezialisierten Labor darstellt, jedoch dazu ausreicht, zu dienen, die aufwändige und aussagekräftigere Analyse im Labor dem Betriebszustand entsprechend/optimiert durchzuführen, indem die detaillierte Analyse im Labor durch die Ölprobenentnahme von Motoröl des Verbrennungsmotors nur noch dann vorgenommen wird, wenn diese tatsächlich erforderlich oder anratbar ist.

Folglich kann gemäß der Erfindung und die erfindungsgemäße zielgerichtete Zustandsüberwachung des Schmierstoffes, der Schmierstoff des Verbrennungsmotors ressourcensparender und effizienter genutzt werden.

Unter Verbrennungsmotoren können thermische Arbeitsmaschinen verstanden werden, bei welchen durch eine Verbrennung thermisch freiwerdende Energie in mechanische Arbeit umgesetzt wird, wie beispielsweise bei Ottomotoren, insbesondere Gasmotoren, Dieselmotoren, Gasturbinen, Heizkessel oder Ähnlichem.

Verbrennungsmotoren, insbesondere stationäre Verbrennungsmotoren, können dazu eingesetzt werden, Generatoren zur Stromerzeugung anzutreiben. Solche Ausgestaltungen werden oft auch als Gensets bezeichnet.

Es kann auch vorgesehen sein, dass die Erfindung ihren Einsatz bei bereits bestehenden Systemen des Standes der Technik und entsprechenden Verbrennungsmotoren (wie beispielsweise in der Beschreibungseinleitung beschrieben) findet und vorzugsweise nachträglich installiert wird.

Unter Öle, sowie Motoröle, sind im vorliegenden Dokument Schmiermittel für den Einsatz bei Verbrennungsmotoren zu verstehen, welche dazu genutzt werden, den Verbrennungsmotor und einzelne Komponenten dessen zu schmieren und/oder zu kühlen. Unter Motorölen und Ölen sind somit keine Brennstoffe des Verbrennungsmotors auszulegen, welche im Zuge des Verbrennungsprozesses des Verbrennungsmotors ihren Einsatz finden.

Unter einer Qualität des Schmierstoffes, des Öls oder des Motoröls ist im vorliegenden Dokument die tatsächliche Qualität zu verstehen und keine Angaben bezüglich einer Menge, eines Volumens oder einer anderen Quantität.

Vorteilhafte Ausführungsformen der Erfindung sind in den abhängigen Ansprüchen definiert.

Es kann vorgesehen sein, dass das Ölprobenentnahmeintervall den Zeitpunkt zur Entnahme einer Ölprobe aus dem Verbrennungsmotor definiert, zu welchem eine Ölprobe aus dem Verbrennungsmotor zur Untersuchung in einem Labor zu entnehmen ist. So kann beispielsweise der Vorschlag signalisieren, dass umgehend eine Ölprobe zu entnehmen ist oder auch bei Erreichen einer bestimmten Betriebsstundenzahl des Verbrennungsmotors.

Vorzugsweise kann vorgesehen sein, dass ein definiertes Ölprobenentnahmeintervall (beispielsweise alle 500 Betriebsstunden) durch die Anpassung angepasst wird, wobei beispielsweise das Zeitintervall bei Veränderung der Messwerte verkürzt wird und/oder verlängert wird. Es kann vorgesehen sein, dass kontinuierlich oder nach Aufforderung eine Information über Ölprobenentnahmeintervall ausgegeben wird.

Es kann vorgesehen sein, dass, wenn durch die Messwerte keine Anpassung des Ölprobenentnahmeintervalls erforderlich ist, eine Meldung gemäß einem vorgebbaren definierten Ölprobenentnahmeintervalls (beispielsweise alle 500 Betriebsstunden) ausgegeben wird.

Das Ölprobenentnahmeintervall definiert einen Vorschlag zur Entnahme einer Ölprobe aus dem Verbrennungsmotor zur Untersuchung in einem Labor, wobei natürlich nur ein Vorschlag für einen Bediener oder Betreiber des Verbrennungsmotors ausgegeben wird. Dieser Vorschlag ist durch den Bediener oder Betreiber des Verbrennungsmotors umzusetzen, sofern dieser einen störungsfreien Betrieb des Verbrennungsmotors wünscht (gegebenenfalls können Garantie- oder Gewährleistungsbedingungen des Herstellers mit der Umsetzung dieses Vorschlages verknüpft sein). Jedoch kann die schlussendliche Umsetzung des Vorschlags zur Entnahme einer Ölprobe aus dem Verbrennungsmotor gemäß dem Ölprobenentnahmeintervall zur Untersuchung in einem Labor immer noch dem Ermessen des Bedieners oder Betreibers unterliegen.

Vorzugsweise kann vorgesehen sein, dass aus zumindest einem numerischen Messwert ein Absolutwert der Ölqualität abgeleitet wird, welcher Absolutwert zur Anpassung des Ölprobenentnahmeintervall herangezogen wird.

Es kann vorgesehen sein, dass eine in Zeitintervallen ermittelte Vielzahl an numerischen Messwerten und/oder daraus abgeleiteten Größen zur Anpassung des Ölprobenentnahmeintervalls herangezogen wird.

Vorzugsweise kann vorgesehen sein, dass eine Änderungsrate zumindest zweier, vorzugsweise in einem Zeitintervall aufeinanderfolgender, Messwerte und/oder daraus abgeleiteten Größen ermittelt wird.

Die Änderungsrate kann beispielsweise eine Steigung einer gedachten, linearen Verbindung zwischen zwei Messwerten, aufgetragen in einem Diagramm der Ölqualität über die Betriebsstundenzahl, betreffen, welche anhand von Versuchen und Experimenten ermittelt wird. Anschließend kann diese Änderungsrate (Steigung) mit einer ermittelten Änderungsrate (Steigung) der aktuell gemessenen Messwerte des wenigstens einen Sensors abgeglichen werden.

Es kann beispielsweise vorsehen sein, dass während Zeitintervallen eine Vielzahl an numerischen Messwerten festgestellt wird, wobei die Vielzahl an während eines Zeitintervalls festgestellten numerischen Messwerten (beispielsweise durch Ermittlung eines Mittelwerts oder eines Medians) geglättet wird und somit beispielsweise in eine aus den numerischen Größen abgeleitete Größe übergeführt wird.

Diese aus während eines Zeitintervalls festgestellten numerischen Messwerte abgeleitete Größe kann mit einer weiteren (beispielsweise in derselben Art ermittelten) abgeleiteten Größe, vorzugsweise welche während eines zweiten - insbesondere direkt anschiebenden - Zeitinterfalls ermittelt wurde, zur Ermittlung der Änderungsrate herangezogen werden.

Es kann vorgesehen sein, dass das Ölprobenentnahmeintervall abhängig von der Änderungsrate angepasst wird.

Vorzugsweise kann vorgesehen sein, dass zumindest zwei in einem bestimmten Zeitintervall gemessene numerische Messwerte und/oder daraus abgeleiteten Größen, vorzugsweise durch Bilden eines Mittelwertes und/oder Medians der Messwerte, zur Anpassung des Ölprobenentnahmeintervalls geglättet werden.

Es kann vorgesehen sein, dass wenigstens zwei numerische Messwerte und/oder daraus abgeleiteten Größen zu vorgegebenen Zeitpunkten, in zueinander vorgegebenen Zeitintervallen und/oder zu definierten Betriebsbedingungen des Verbrennungsmotors, vorzugsweise kontinuierlich, durch den wenigstens einen Sensor ermittelt werden.

Diese vorgegebenen Zeitpunkte und/oder Zeitabstände können im Laufe des Betriebes variieren und müssen nicht zwangsläufig konstant sein.

Es kann auch vorgesehen sein, dass der wenigstens eine Sensor fortlaufend eine Messung durchführt, wobei einzelne Messwerte der fortlaufenden Messung herangezogen oder entnommen werden.

Vorzugweise kann vorgesehen sein, dass die numerischen Messwerte und/oder daraus abgeleiteten Größen mit einer Messfrequenz in einem Bereich zwischen 0,5 Hz und 3 Hz erfasst werden.

Es kann vorgesehen sein, dass durch den wenigstens einen Sensor eine elektro-chemische Zustandsgröße, vorzugsweise eine elektrische Leitfähigkeit und/oder Permittivität und/oder elektrische Kapazität, des Motoröls gemessen wird, welche elektro-chemische Zustandsgröße den charakteristischen numerischen Messwert für die Ölqualität des Motoröls darstellt. Ein solcher Sensor kann beispielweise, wie durch die US 2009/0315574 A1 ausgeführt, ausgebildet sein.

Beispiele für Messgrößen des wenigstens einen Sensors sind beispielsweise der Eisengehalt, die Oxidationsrate, der Wasseranteil oder auch der i-pH-Wert des Schmierstoffes oder Motoröls.

Die Messung des wenigstens einen Sensors kann beispielsweise über eine elektrische Leitfähigkeit und/oder Permittivitätund/oder eine elektrische Kapazität des Schmierstoffes und/oder Motoröls erfolgen, als auch als optische Messung.

Vorzugsweise kann vorgesehen sein, dass die numerischen Messwerte und/oder die daraus abgeleiteten Größen mit einer definierten Bedingung abgeglichen werden, wobei - wenn die Messwerte der Bedingung nicht entsprechen - das Ölprobenentnahmeintervall angepasst wird.

Die Bedingung kann somit beispielsweise einer kalkulierten, berechneten oder auch geschätzten Qualitätsreduktion des Motoröls während des laufenden Betriebs des Verbrennungsmotors entsprechen, wobei über den wenigstens einen Sensor diese Bedingung überprüft wird und lediglich eine Anpassung des Ölprobenentnahmeintervalls vorgeschlagen wird, wenn die über den wenigstens einen Sensor gemessene Ölqualität der berechneten, vorhergesehenen oder geschätzten Verringerung der Ölqualität nicht entspricht.

Es kann vorgesehen sein, dass durch die Bedingung eine unter Normalbedingungen und/oder in Versuchen bestimmte Alterungsrate für Motoröle in Abhängigkeit von Betriebsstunden des Verbrennungsmotors wiedergegeben wird.

Eine Normalbedingung eines Verbrennungsmotors kann beispielsweise einen Betrieb des Verbrennungsmotors unter optimalen Einsatzbedingungen betreffen, welcher ohne technische Gebrechen - vorzugsweise unter Versuchsbedingungen - vorliegt.

Die Abhängigkeit der Betriebsstunden des Verbrennungsmotors kann die vom Verbrennungsmotor geleisteten Betriebsstunden seit dem letzten Wechsel des Motoröls betreffen (also eine Betriebsstundenzahl des Verbrennungsmotors, während welcher das gleiche Motoröl bereits in Verwendung ist).

Vorzugsweise kann vorgesehen sein, dass durch die Bedingung ein Bereich wiedergegeben wird, vorzugsweise welcher Bereich eine annehmbare Schwankung der Ölqualität und/oder eine Messungenauigkeit des wenigstens einen Sensors berücksichtigt.

So kann beispielsweise vorgesehen sein, dass einerseits durch die als Bereich ausgebildete Bedingung ein Bereich wiedergegeben wird, in welchem sich die gemessene Ölqualität des Motoröls befinden kann, welche hinsichtlich beispielsweise einer Betriebsstundenzahl annehmbar ist (und in welchem Bereich ein weiterer reibungsloser Betrieb des Verbrennungsmotors gewährleistet werden kann).

Weiters kann die als Bereich ausgebildete Bedingung Messungenauigkeiten des wenigstens einen Sensors berücksichtigen (beispielsweise +/- 5%), sodass Schwankungen der Messwerte, welche durchaus anzunehmen sind, nicht direkt zu einer "Falschmeldung" führen.

Vorzugsweise kann vorgesehen sein, dass ein Zeitraum zwischen der Ermittlung zweier aufeinander folgender Messwerte durch den wenigstens einen Sensor verkürzt oder verlängert wird, wenn sich die Messwerte und oder einer abgeleiteten Größe daraus einer Grenze der Bedingung annähern.

So kann es beispielsweise vorgesehen sein, dass - wenn sich die numerischen Messwerte des wenigstens einen Sensors oder eine daraus abgeleitete Größe einem Grenzbereich der Bedingung annähern - der Abstand zwischen den Messungen verkürzt wird, um frühestmöglich eine Überschreitung der Messwerte außerhalb der Bedingung feststellen zu können und entsprechend frühzeitig durch Anpassung des Ölprobenentnahmeintervalls reagieren zu können.

Andererseits kann es auch vorgesehen sein, dass - wenn sich die numerischen Messwerte des wenigstens einen Sensors oder eine daraus abgeleitete Größe von einem Grenzbereich der Bedingung entfernen - der Abstand zwischen den Messungen verlängert wird, um den Senor und beteiligte Komponenten ressourcensparender einsetzen zu können (beispielsweise deren Standzeit durch verringerten Einsatz zu erhöhen).

Es kann vorgesehen sein, dass das Ölprobenentnahmeintervall in Form einer Meldung und vorzugsweise eine Änderung des Ölprobenentnahmeintervalls in Form einer Warnung ausgegeben wird.

Es kann vorgesehen sein, dass die Meldung und/oder die Warnung einem Bediener des Verbrennungsmotors akustisch und/oder optisch bereitgestellt wird.

Es kann beispielsweise auch vorgesehen sein, dass die Meldung in Form einer automatisierten Entnahme einer Ölprobe aus dem Verbrennungsmotor unter Berücksichtigung des angepassten Ölprobeentnahmeintervalls erfolgt.

Vorzugsweise kann vorgesehen sein, dass die numerischen Messwerte des wenigstens einen Sensors und/oder die daraus abgeleiteten Größen vor der Anpassung des Ölprobenentnahmeintervalls einer Plausibilitätskontrolle unterzogen werden, vorzugsweise wobei die numerischen Messwerte und/oder die daraus abgeleiteten Größen zur Anpassung des Ölprobenentnahmeintervalls nur herangezogen werden, wenn die numerischen Messwerte und/oder die daraus abgeleiteten Größen innerhalb von vorgegebenen Plausibilitätsgrenzen liegen.

So können beispielsweise Messfehler oder Sensorfehler ausgeschlossen werden, indem diese erkannt werden. Die Plausibilitätsgrenzen können beispielsweise im laufenden Betrieb variabel angepasst werden, sodass vorzugsweise in Abhängigkeit der Betriebsstundenzahl diese angepasst werden, um Messfehler und/oder Sensorfehler auszuschließen.

Wenn die numerischen Messwerte des wenigstens einen Sensors und/oder die daraus abgeleiteten Größen nicht innerhalb von vorgegebenen Plausibilitätsgrenzen liegen, kann das Verfahren beispielsweise abgebrochen oder neu durchgeführt werden. Auch eine Wiederholung der Messung durch den wenigstens einen Sensor ist durchaus vorstellbar.

Wenn die Messung durch den wenigstens einen Sensor wiederholt wird und die numerischen Messwerte des wenigstens einen Sensors und/oder die daraus abgeleiteten Größen weiterhin nicht innerhalb der Plausibilitätsgrenze liegen, kann beispielsweise eine Meldung ausgegeben werden, welche die Funktionsfähigkeit des Sensors oder des Messsystems in Frage stellt und vorzugsweise einen Bediener auffordert, diese Komponenten zu überprüfen.

Solche Abweichungen, wobei die numerischen Messwerte des wenigstens einen Sensors und/oder die daraus abgeleiteten Größen außerhalb von Plausibilitätsgrenzen liegen, können beispielsweise durch die Verunreinigung des wenigstens einen Sensors, den Defekt des wenigstens einen Sensors und/oder den Defekt eines den wenigstens einen Sensor inkludierenden Messsystems verursacht werden.

Es kann vorgesehen sein, dass die numerischen Messwerte des wenigstens einen Sensors und/oder die daraus abgeleiteten Größen durch den wenigstens einen Sensor während definierter Betriebsbedingungen des Verbrennungsmotors bereitgestellt werden.

Entsprechende definierte Betriebsbedingungen des Verbrennungsmotors können beispielsweise der laufende Betrieb des Verbrennungsmotors (und somit nicht der Stillstand) sein oder auch eine gewisse Betriebstemperatur des Motoröls (beispielsweise über 65°C) betreffen, sowie eine gewisse Lastanforderung, Drehzahl oder Umgebungstemperatur des Verbrennungsmotors.

Diese Definition der Betriebsbedingung des Verbrennungsmotors, während welcher die numerischen Messwerte durch den wenigstens einen Sensor erfasst werden, hat den Sinn, dass sich mit wechselnder Betriebsbedingung (wie beispielsweise der Temperatur des Motoröls) auch starke Einflüsse auf die physikalischen Eigenschaften (wie beispielsweise die Leitfähigkeit, die Viskosität oder Ähnliches) des Motoröls zeigen. So schwanken beispielsweise die numerischen Messwerte des wenigstens einen Sensors bei unterschiedlichen Temperaturen sowie Flussgeschwindigkeiten und Durchflussraten des Motoröls am wenigstens einen Sensor stark.

Es kann vorgesehen sein, dass die numerischen Messwerte durch den wenigstens einen Sensor außerhalb der definierten Betriebsbedingungen festgestellt werden, diese jedoch nicht für die Zustandsüberwachung eines Schmierstoffes eines Verbrennungsmotors herangezogen werden.

Vorzugsweise kann vorgesehen sein, dass - wenn eine Abweichung der Messwerte und/oder der daraus abgeleiteten Größen einen vorgebbaren Toleranzbereich überschreiten - eine kritische Meldung ausgeben wird, vorzugsweise welche kritische Meldung den Betrieb des Verbrennungsmotors unterbricht und/oder beschränkt (beispielswiese eine Leistung des Verbrennungsmotors reduziert wird).

Somit kann es vorgesehen sein, dass - wenn sich die numerischen Messwerte und/oder daraus abgeleiteten Größen rapide verschlechtern - ein weiterer Schwellwert überschritten werden kann, welcher durch den Toleranzbereich ausgebildet ist und eine kritische Meldung ausgegeben wird, welche den Betrieb des Verbrennungsmotors sofortig beendet oder den Betrieb des Verbrennungsmotors einschränkt (beispielsweise, indem eine Leistung des Verbrennungsmotors reduziert wird), da kein sicherer, weiterer Betrieb des Verbrennungsmotors garantiert werden kann.

Eine solche rapide Verschlechterung des Motoröls kann beispielsweise auftreten, wenn es zu Beschädigungen im Verbrennungsmotor kommt und beispielsweise vermehrt Partikel, Späne oder anderwertig abgetragene Elemente das Motoröl belasten und/oder vermehrt Partikel aus der Verbrennung in das Motoröl gelangen.

Es kann vorgesehen sein, dass ein Verfahren zur Überwachung eines Schmierstoffzustandes eines Verbrennungsmotors folgende Schritte umfasst:
- Erfassen von Messwerten mit dem wenigstens einen Sensor über eine Laufzeit eines Verbrennungsmotors, wobei die Messwerte repräsentativ für die Ölqualität des Verbrennungsmotors sind;
- Ermitteln eines Absolutwertes der Ölqualität in Zeitintervallen Δtn (n=1,2,3,...) über die in demselben Zeitintervall Δtn bestimmten Messwerte,
- Anpassen des Ölprobenentnahmeintervalls abhängig vom ermittelten Absolutwert der Ölqualität.

Es kann vorgesehen sein, dass eine Änderungsrate des Absolutwertes der Ölqualität zwischen zumindest zwei Zeitintervallen Δtn und Δtn+1 ermittelt wird.

Vorzugsweise kann vorgesehen sein, dass das Ölprobenentnahmeintervall zudem abhängig von der Änderungsrate des Absolutwertes angepasst wird.

Es kann vorgesehen sein, dass zumindest zwei Messwerte gemessen über ein bestimmtes Zeitintervall Δtn (n=1,2,3,...) für alle Zeitintervalle Δtn, vorzugsweise durch Bilden eines Mittelwertes der Messwerte, geglättet werden.

Vorzugsweise kann vorgesehen sein, dass die Messewerte im Wesentlichen kontinuierlich erfasst werden.

Es kann vorgesehen sein, dass - wenn entweder der Absolutwert der Ölqualität und/oder die Änderungsrate der Ölqualität einen vordefinierten Grenzwert erreicht - das Ölprobenentnahmeintervall angepasst wird

Vorzugsweise kann vorgesehen sein, dass das Ölprobenentnahmeintervall über eine Anzeigevorrichtung angezeigt wird und im Falle einer Änderung des Ölprobeentnahmeintervalls zudem eine entsprechende Warnung ausgegeben wird.

Weiters wird Schutz begehrt für einen Verbrennungsmotor mit wenigstens einem Ölkreislauf, umfassend eines im Ölkreislauf transportierten Motoröls zur Schmierung und/oder Kühlung des Verbrennungsmotors, wobei der Verbrennungsmotor weiters wenigstens einen Sensor zur Erfassung charakteristischer numerischer Messwerte für eine Ölqualität des Motoröls und eine Steuer- oder Regelvorrichtung, in welcher die charakteristischen numerischen Messwerte des wenigstens einen Sensors bereitstellbar sind, umfasst, dadurch gekennzeichnet, dass die Steuer- oder Regelvorrichtung dazu ausgebildet ist, zur Zustandsüberwachung eines Schmierstoffes des Verbrennungsmotors ein Ölprobenentnahmeintervall abhängig von zumindest einem numerischen Messwert und/oder einer daraus abgeleiteten Größe anzupassen.

Es kann vorgesehen sein, dass der Ölkreislauf des Verbrennungsmotors wenigstens einen Ölkühler und wenigstens einen in Strömungsrichtung des Motoröls nachgeschalteten Ölfilter aufweist, wobei der wenigstens eine Sensor im Ölkreislauf zwischen dem wenigstens einen Ölkühler und dem wenigstens einen Ölfilter angeordnet ist.

Durch die Anordnung des wenigstens einen Sensors in Strömungsrichtung des Motoröls durch den Ölkreislauf nachfolgend zum Ölkühler wird sichergestellt, dass das Motoröl am wenigstens einen Sensor möglichst eine konstante Temperatur während des Betriebs des Verbrennungsmotors aufweist, sodass sich am wenigstens einen Sensor hinsichtlich der Temperatur des Motoröls optimale Bedingungen für vergleichbare charakteristische numerische Messwerte ergeben.

Durch das Anordnen des wenigstens einen Sensors in Strömungsrichtung des Motoröls vor dem wenigstens einen Ölfilter wird die Messung des wenigstens einen Sensors durch den Ölfilter nicht beeinflusst, wobei sich nach der Filtration durch den Ölfilter gereinigte Zustände und nicht ausschlaggebende, charakteristische numerische Messwerte für die Ölqualität erfassen lassen.

Weiters wird Schutz begehrt für ein Computerprogrammprodukt, umfassend Befehle, die bei der Ausführung des Programmes durch eine Steuer- oder Regelvorrichtung eines Verbrennungsmotors diese dazu veranlassen, ein erfindungsgemäßes Verfahren auszuführen.

Ebenfalls wird Schutz begehrt für ein Datenträgersignal, das das erfindungsgemäße Computerprogrammprodukt überträgt.

Es kann vorgesehen sein, dass die Steuer- oder Regelvorrichtung eine Anzeigevorrichtung aufweist oder mit einer solchen signalleitend verbunden ist, wobei Ölprobenentnahmeintervall, der zumindest eine numerische Messwert und/oder die daraus abgeleitete Größe über die Anzeigevorrichtung durch die Steuer- oder Regelvorrichtung für einen Bediener ersichtlich ausgebbar ist.

Es kann auch vorgesehen sein, dass über die Anzeigevorrichtung eine Änderung des Ölprobenentnahmeintervalls ausgebbar ist. So kann beispielsweise vorgesehen sein, dass kontinuierlich ein Zeitpunkt für die nächste Entnahme einer Ölprobe aus dem Verbrennungsmotor gemäß dem Ölprobenentnahmeintervall zur Untersuchung im Labor über die Anzeigevorrichtung angezeigt wird. Wenn das Ölprobenentnahmeintervall abhängig von dem zumindest einen numerischen Messwert und/oder der daraus abgeleiteten Größe angepasst wird, die Änderung ausgegeben wird.

Das Ölprobenentnahmeintervall kann beispielsweise in verschiedensten Formen für einen Bediener, einen Betreiber oder eine kooperierende Steuer- oder Regelvorrichtung bereitgestellt werden, wie beispielsweise durch ein visuelles Signal, ein Steuersignal, digitale Signale, in einer Cloud hinterlegte Signale oder Ähnliches.

Es kann vorgesehen sein, dass die Funktion der Steuer- oder Regelvorrichtung eine zentrale Steuer- oder Regelvorrichtung des Verbrennungsmotors übernimmt.

Jedoch ist es auch möglich, dass die Steuer- oder Regelvorrichtung über ein LAN, WLAN und/oder eine Datenfernübertragungsverbindung (z. B. Internet) mit dem Verbrennungsmotor verbunden oder verbindbar ist. Auch Mischformen sind denkbar, wobei gewisse Funktionen der Steuer- oder Regeleinheit an dem Verbrennungsmotor realisiert werden und gewisse andere Funktionen fern vom Verbrennungsmotor realisiert werden.

Durchaus denkbar ist auch eine Ausführungsform, in welcher die Steuer- oder Regeleinheit durch baulich getrennte Recheneinheiten ausgebildet ist, welche Recheneinheiten in signalleitender Verbindung miteinander stehen. Auch eine Ausführungsform ist denkbar, bei welcher Ressourcen der Steuer- oder Regelvorrichtung geteilt werden.

Beispielsweise könnte es auch vorgesehen sein, dass der vom wenigstens einen Sensor generierte Messwert am Verbrennungsmotor an einer zentralen Steuer- oder Regelvorrichtung bearbeitet wird, wobei eine Anzeige einer gegebenenfalls ausgegebenen Meldung in einem von überall zugänglichen Portal bereitgestellt wird. Natürlich besteht in umgekehrter Richtung auch wieder die Möglichkeit, ein Signal von einem überall zugänglichen Portal an die zentrale Steuer- oder Regelvorrichtung des Verbrennungsmotors zu schicken.

Weiters kann es vorgesehen sein, dass im Rahmen der Auswertung Daten für eine Visualisierung - d. h. eine Bildschirmdarstellung oder dergleichen - für Bediener berechnet werden.

Es kann dabei beispielsweise vorgesehen sein, dass bei der Analyse der Steuer- oder Regelvorrichtung Daten für die Visualisierung berechnet werden, welche anschließend in Form einer Meldung über eine Datenübertragungsverbindung an den Verbrennungsmotor weitergegeben werden können und an diesem an einem Bildschirm für den Bediener ersichtlich angezeigt werden können.

Weitere Vorteile und Einzelheiten der Erfindung ergeben sich aus den Figuren sowie der dazugehörigen Figurenbeschreibung. Dabei zeigt:
- Fig. 1: ein Ausführungsbeispiel eines Verbrennungsmotors,
- Fig. 2: ein Ausführungsbeispiel eines Ölkreislaufs eines Verbrennungsmotors, und
- Fig. 3: ein Ausführungsbeispiel eines erfindungsgemäßen Verfahrens zur Zustandsüberwachung eines Schmierstoffes eines Verbrennungsmotors.

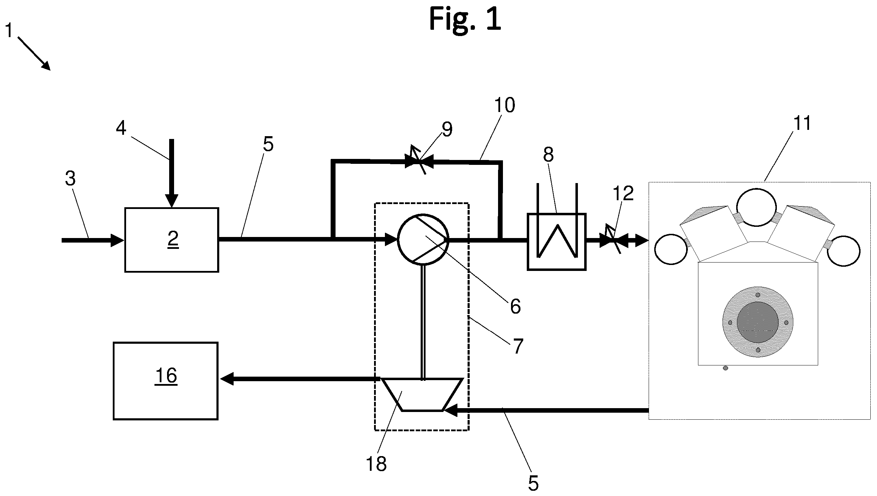

Fig. 1 zeigt eine schematische Darstellung eines ersten Ausführungsbeispiels eines Verbrennungsmotors 1, wobei die Stoffströme des Verbrennungsmotors 1 illustriert sind.

Es handelt sich bei dieser Ausführungsvariante um einen stationären, gasbetriebenen Verbrennungsmotor 1.

So wird zunächst einer Gasmischvorrichtung 2 Luft 3 und ein Brennstoff 4 (vorzugsweise Methan und/oder Wasserstoff) zugeführt, wobei über die Gasmischvorrichtung 2 ein Luft-Brennstoff-Gemisch hergestellt wird und in die Zuführleitung 5 des Verbrennungsmotors 1 eingespeist wird.

Dieses Luft-Brennstoff-Gemisch wird anschließend über einen Verdichter 6 eines Abgasturboladers 7 verdichtet und mittels eines Ladeluftkühlers 8 gekühlt.

Der Verdichter 6 ist durch eine ein Bypassventil 9 aufweisende Bypassleitung 10 umgehbar, wobei zum Steuern oder Regeln eines Ladedrucks (und somit indirekt einer Leistung und/oder einer Drehzahl des Verbrennungsmotors 1) in bekannter Weise ein Luft-Brennstoff-Gemisch, welches den Verdichter 6 über die Bypassleitung 10 von der Hochdruckseite in Richtung der Niederdruckseite des Verdichters 6 umgeht, durch das Bypassventil 9 gesteuert oder geregelt werden kann.

Anschließend wird das gekühlte, verdichtete Luft-Brennstoff-Gemisch (hier exemplarisch dargestellt mit Brennräumen 11 des Verbrennungsmotors 1) zugeführt.

Zwischen dem Ladeluftkühler 8 und den Brennräumen 11 ist in der Zuführleitung 5 ein Drosselventil 12 angeordnet, welches dazu ausgebildet ist, durch Beeinflussung der Durchflussmenge den Ladedruck des Verbrennungsmotors 1 zu steuern oder zu regeln.

In diesen Brennräumen 11 wird das Luft-Brennstoff-Gemisch verdichtet, verbrannt und expandiert, wobei die freiwerdende thermische Energie in mechanische umgesetzt wird.

Nach der Verbrennung werden die in der Verbrennung gebildeten Abgase über die Abgasleitung 13 abgeführt, welche dazu genutzt werden, die mit dem Verdichter 6 mechanisch gekoppelte Abgasturbine 14 des Abgasturboladers 7 anzutreiben.

Nach Durchlaufen des Abgasturboladers 7 kann anschließend das Abgas noch der Abgasnachbehandlungsvorrichtung 15 zugeführt werden, welche beispielsweise als 3-Wege-Katalysator, SCR-Katalysator oder auch als Wärmetauscher zur Rückgewinnung von Wärme ausgebildet sein kann.

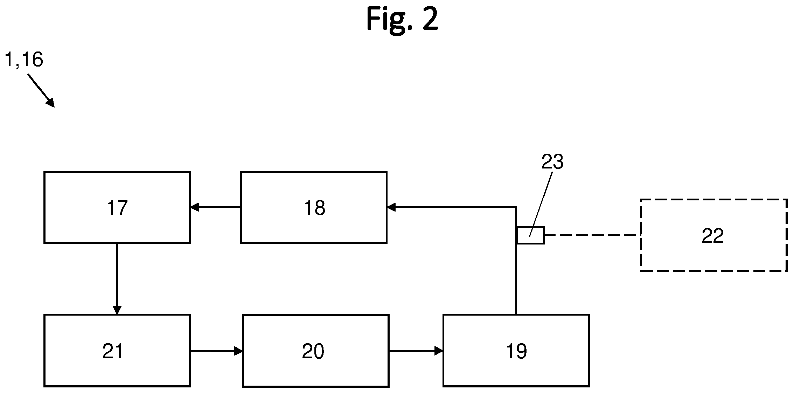

Fig. 2 zeigt ein Ausführungsbeispiel eines Ölkreislaufes 16 eines Verbrennungsmotors 1, beispielsweise wie der in Fig. 1 dargestellte Verbrennungsmotor 1.

Dieser Ölkreislauf 16 des Verbrennungsmotors 1 ist schematisch dargestellt, wobei die Pfeile einerseits die Strömungsrichtung des Motoröls im Ölkreislauf 16 andeuten und andererseits die fluidtechnische Verbindung zwischen den Komponenten, beispielsweise durch eine Ölleitung, symbolisieren.

Das Motoröl wird aus einer Ölwanne 21 des Verbrennungsmotors 1, worin sich das Motoröl sammelt, über eine Ölpumpe 20 zum Ölkühler 19 gefördert, welcher dazu vorgesehen ist, das Motoröl zu temperieren bzw. zu kühlen.

Vom Ölkühler 19 gelangt das Motoröl zum Ölfilter 18, durch welchen Schwebstoffe und Partikel aus dem Motoröl gefiltert werden, bevor das Motoröl anschließend in das Kurbelgehäuse 17 des Verbrennungsmotors 1 eintritt, um dort zur Schmierung und/oder Kühlung des Verbrennungsmotors 1 während des Verbrennungsprozesses zu dienen.

Nach dem Einsatz des Motoröls sammelt sich dieses wieder in der Ölwanne 21, wodurch der Ölkreislauf 16 des Verbrennungsmotors 1 geschlossen wird.

Die einzelnen Komponenten des Ölkreislaufes 16 (Kurbelgehäuse 17, Ölfilter 18, Ölkühler 19, Ölpumpe 20 und Ölwanne 21) sind beispielsweise physisch durch einen Maschinenrahmen des Verbrennungsmotors 1 verbunden.

Zwischen dem Ölfilter 18 und dem Ölkühler 19 befindet sich der Sensor 23, welcher dazu ausgebildet ist, zumindest einen numerischen Messwert 28 repräsentativ für die Ölqualität des Motoröls bereitzustellen, welcher numerische Messwert 28 über eine signalleitende Verbindung (durch die strichlierte Linie dargestellt) der Steuer- oder Regelvorrichtung 20 bereitgestellt werden kann.

Der Sensor 23 ist dabei als ein Sensor ausgebildet, welcher über die elektrische Leitfähigkeit und/oder Permittivität des Motoröls den nummerischen Messwert 28 bereitstellt, welcher indikativ für die Ölqualität des Motoröls ist. Ein solcher Sensor 23 kann beispielsweise gemäß bekannten Ausführungsvarianten des Standes der Technik umgesetzt sein.

Die Steuer- oder Regelvorrichtung dieses Ausführungsbeispiels ist dazu ausgebildet, den numerischen Messwert 28 des Sensors 23 entgegenzunehmen und in einen Absolutwert 27 zu transformieren. Der Absolutwert 27 kann beispielsweise über eine Prozentangabe (0-100%) eine Ölqualität des Motoröls wiederspielen.

Diese abgeleitete Größe des numerischen Messwerts 28 (der Absolutwert 27) wird mit einer in der Steuer- oder Regelvorrichtung 22 hinterlegten Bedingung 24 abgeglichen, wobei - wenn der Messwert 28 des Sensors 23 die Bedingung 24 erfüllt - die Messung fortgeführt wird und wenn der Messwert 28 des Sensors 23 die Bedingung 24 nicht erfüllt, ein Ölprobenentnahmeintervall abhängig von zumindest einem numerischen Messwert 28 und/oder dem Absolutwert 27 angepasst wird.

Das Ölprobenentnahmeintervall wird in Form einer Meldung 31 ausgegeben.

Diese Ausgabe der Meldung 31 durch die Steuer- oder Regelvorrichtung 22 kann über eine Anzeigevorrichtung der Steuer- oder Regelvorrichtung 22 vorgenommen werden.

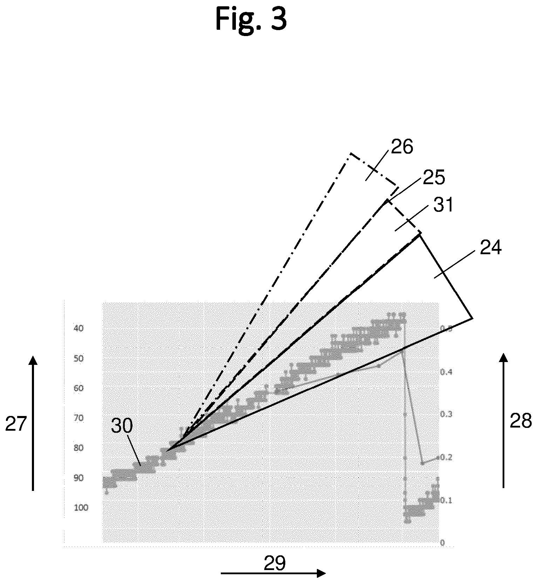

Fig. 3 zeigt graphisch ein Ausführungsbeispiel gemäß dem erfindungsgemäßen Verfahren zur Zustandsüberwachung eines Schmierstoffes des Verbrennungsmotors 1.

Diese Graphik zeigt den Zusammenhang von Messwerten 28 des Sensors 23 bezüglich Betriebsstunden 29 des Verbrennungsmotors 1 und welche Bedingung 24 in der Steuer- oder Regelvorrichtung 22 hinterlegt sein kann.

Dabei wurden über Versuche und Simulationen Referenzwerte 30 ermittelt, welche die annehmbare Alterung eines Motoröls hinsichtlich der geleisteten Betriebsstunden 29 des Verbrennungsmotors 1 darstellt.

Diese Referenzwerte 30 wurden in ein Diagramm eingetragen, welches die für die Ölqualität charakteristischen Messwerte 28 des Sensors 23 durch die daraus abgeleitete Größe des Absolutwertes 27 über die Betriebsstunden 29 darstellt.

Wie ersichtlich wird, ist der numerische Messwert 28 des Sensors 23 (welcher sich zwischen einem Wert von 0 und 1 bewegt) in eine abgeleitete Größe - dem Absolutwert 27 einer Ölqualität des Motoröls - übergeführt worden (gegenläufig abnehmend von 100% zu 0%).

Weiters wurde definiert, dass - wenn der Absolutwert 27 der Ölqualität unter einen Bereich von 40% sinkt - direkt die Entnahme deiner Ölprobe von Motoröl aus dem Verbrennungsmotor 1 gefordert wird.

Die Referenzwerte 30 der normalen Alterung hinsichtlich der Betriebsstunden 29 des Verbrennungsmotors 1 bilden, wie ersichtlich wird, eine annähernd lineare Funktion.

Durch diese lineare Funktion wurde die Bedingung 24, welche einen Bereich darstellt, definiert.

Bei der Bedingung 24 wurden des Weiteren mögliche Abweichungen der Messwerte aufgrund von Messungenauigkeiten sowie eine annehmbare Schwankung der Ölqualität berücksichtigt.

Daraus ergibt sich die Bedingung 24, welcher zu jeder Betriebsstundenzahl ein Minimum und Maximum der zulässigen Ölqualität zugeordnet ist.

Wenn nun im laufenden Betrieb des Verbrennungsmotors 1 über den Sensor 23 ein numerischer Messwert festgestellt wird, welcher die Bedingung 24 nicht erfüllt, indem es eine durch die Bedingung 24 definierte Untergrenze der Ölqualität überschreitet, wird durch die Steuer- oder Regelvorrichtung 22 eine entsprechende Meldung 31 in Form einer Anpassung des Ölprobenentnahmeintervalls ausgegeben.

Dies beruht auf der Tatsache, dass ein solcher numerischer Messwert 28 des Sensors 23 eine nicht zu erwartende Veränderung der Ölqualität andeutet, wodurch es gilt, genauere Untersuchungen anzustellen, indem eine Ölprobe von Motoröl aus dem Verbrennungsmotor 1 entnommen wird und zur detaillierten Analyse einem Labor übermittelt wird, wobei anschließend aufgrund der Laborwerte des Motoröls über das weitere Vorgehen mit dem Motoröl (Tausch oder weiterer Betrieb des Verbrennungsmotors 1) entschieden werden kann.

Wenn sich jedoch die Ölqualität 24 hinsichtlich einer definierten Betriebsstundenzahl rapide verringert, kann des Weiteren ein Toleranzbereich 25 vorgesehen sein, wobei bei Überschreiten dieses Toleranzbereichs 25 durch die Steuer- oder Regelvorrichtung 22 eine kritische Meldung 26 ausgegeben werden kann.

Eine solche kritische Meldung 26 der Steuer- oder Regelvorrichtung 22 kann beispielsweise das Stillsetzen des Verbrennungsmotors 1 oder die Beschränkung (beispielsweise einer Leitung) des Verbrennungsmotors 1 zur Folge haben.

Dies hat darin den Hintergrund, dass eine solche rapide Verschlechterung des Motoröls nicht auf den normalen Betrieb des Verbrennungsmotors 1 zurückzuführen ist, wobei mit großer Wahrscheinlichkeit diese rapide Verringerung der Motorölqualität eine Schädigung des Verbrennungsmotors 1 als Hintergrund hat, aufgrund dessen der Betrieb des Verbrennungsmotors 1 sofort einzustellen ist, um noch weitere folgende größere Beschädigungen zu vermeiden.

### Bezugszeichenliste

- 1: Verbrennungsmotor
- 2: Gas-Misch-Vorrichtung
- 3: Luft
- 4: Brennstoff
- 5: Zuführleitung
- 6: Verdichter
- 7: Abgasturbolader
- 8: Ladeluftkühler
- 9: Bypassventil
- 10: Bypassleitung
- 11: Brennraum
- 12: Drosselventil
- 13: Abgasleitung
- 14: Abgasturbine
- 15: Abgasnachbehandlungsvorrichtung
- 16: Ölkreislauf
- 17: Kurbelgehäuse
- 18: Ölfilter
- 19: Ölkühler
- 20: Ölpumpe
- 21: Ölwanne
- 22: Steuer- oder Regelvorrichtung
- 23: Sensor
- 24: Bedingung
- 25: Toleranzbereich
- 26: kritische Meldung
- 27: Absolutwert
- 28: Messwert
- 29: Betriebsstunden
- 30: Referenzwerte
- 31: Meldung

## Patentansprüche

1. Verfahren zur Überwachung eines Schmierstoffes eines Verbrennungsmotors (1), wobei numerische Messwerte (28) mit wenigstens einem Sensor (23) über eine Laufzeit eines Verbrennungsmotors (1) erfasst werden, wobei die numerischen Messwerte (28) repräsentativ für eine Ölqualität eines Motoröls des Verbrennungsmotors (1) sind, **dadurch gekennzeichnet, dass** ein Ölprobenentnahmeintervall abhängig von zumindest einem numerischen Messwert (28) und/oder einer daraus abgeleiteten Größe angepasst wird.

2. Verfahren nach Anspruch 1, wobei aus zumindest einem numerischen Messwert (28) ein Absolutwert (27) der Ölqualität abgeleitet wird, welcher Absolutwert (28) zur Anpassung des Ölprobenentnahmeintervalls herangezogen wird.

3. Verfahren nach einem der vorhergehenden Ansprüche, wobei eine in Zeitintervallen ermittelte Vielzahl an numerischen Messwerten (28) und/oder daraus abgeleiteten Größen zur Anpassung des Ölprobenentnahmeintervalls herangezogen wird.

4. Verfahren nach einem der vorhergehenden Ansprüche, wobei eine Änderungsrate zumindest zweier, vorzugsweise in einem Zeitintervall aufeinanderfolgender, numerischer Messwerte (28) und/oder daraus abgeleiteten Größen ermittelt wird.

5. Verfahren nach dem vorhergehenden Anspruch, wobei das Ölprobenentnahmeintervall abhängig von der Änderungsrate angepasst wird.

6. Verfahren nach wenigstens einem der vorhergehenden Ansprüche, wobei zumindest zwei in einem bestimmten Zeitintervall gemessene numerische Messwerte (28) und/oder daraus abgeleiteten Größen, vorzugsweise durch Bilden eines Mittelwertes und/oder Medians der Messwerte, zur Anpassung des Ölprobenentnahmeintervalls geglättet werden.

7. Verfahren nach wenigstens einem der vorhergehenden Ansprüche, wobei wenigstens zwei numerische Messwerte (28) und/oder daraus abgeleitete Größen zu vorgegebenen Zeitpunkten in zueinander vorgegebenen Zeitintervallen und/oder zu definierten Betriebsbedingungen des Verbrennungsmotors (1), vorzugsweise kontinuierlich, durch den wenigstens einen Sensor (23) ermittelt werden.

8. Verfahren nach wenigstens einem der vorhergehenden Ansprüche, wobei die numerischen Messwerte (28) und/oder daraus abgeleitete Größen mit einer Messfrequenz in einem Bereich zwischen 0,5 Hz und 3 Hz erfasst werden.

9. Verfahren nach wenigstens einem der vorhergehenden Ansprüche, wobei durch den wenigstens einen Sensor (23) eine elektro-chemische Zustandsgröße, vorzugsweise elektrische Leitfähigkeit und/oder Permittivität, des Motoröls gemessen wird, welche elektro-chemische Zustandsgröße den charakteristischen numerischen Messwert (28) für die Ölqualität des Motoröls darstellt.

10. Verfahren nach wenigstens einem der vorhergehenden Ansprüche, wobei die numerischen Messwerte (28) und/oder die daraus abgeleiteten Größen mit einer definierten Bedingung (24) abgeglichen werden, wobei - wenn die Messsignale (28) der Bedingung (24) nicht entsprechen - das Ölprobenentnahmeintervall angepasst wird.

11. Verfahren nach dem vorhergehenden Anspruch, wobei durch die Bedingung (24) eine unter Normalbedingungen und/oder in Versuchen bestimmte Alterungsrate für Motoröle in Abhängigkeit von Betriebsstunden des Verbrennungsmotors (1) wiedergegeben wird.

12. Verfahren nach wenigstens einem der vorhergehenden Ansprüche, wobei das Ölprobenentnahmeintervall in Form einer Meldung (31) und vorzugsweise eine Änderung des Ölprobenentnahmeintervalls in Form einer Warnung ausgegeben wird.

13. Verbrennungsmotor mit wenigstens einem Ölkreislauf (16), umfassend ein im Ölkreislauf (16) transportiertes Motoröl zur Schmierung und/oder Kühlung des Verbrennungsmotors (1), wobei der Verbrennungsmotor (1) weiters wenigstens einen Sensor (23) zur Erfassung zumindest eines charakteristischen, numerischen Messwertes (28) für eine Ölqualität des Motoröls und eine Steuer- oder Regelvorrichtung (22), welcher der zumindest eine numerische Messwert (28) des wenigstens einen Sensors (23) bereitstellbar sind, umfasst, **dadurch gekennzeichnet, dass** die Steuer- oder Regelvorrichtung (22) dazu ausgebildet ist, zur Zustandsüberwachung eines Schmierstoffes des Verbrennungsmotors (1) ein Ölprobenentnahmeintervall abhängig von zumindest einem numerischen Messwert (28) und/oder einer daraus abgeleiteten Größe anzupassen.

14. Computerprogrammprodukt, umfassend Befehle, die bei der Ausführung des Programms durch eine Steuer- oder Regelvorrichtung (22) eines Verbrennungsmotors (1), vorzugsweise eines Verbrennungsmotors (1) nach Anspruch 13, diese dazu veranlassen, das Verfahren nach wenigstens einem der Ansprüche 1 bis 12 auszuführen.

15. Datenträgersignal, das das Computerprogrammprodukt nach Anspruch 14 überträgt.

## Claims

1. A method for monitoring a lubricant of an internal combustion engine (1), wherein numerical measured values (28) are recorded with at least one sensor (23) over a runtime of an internal combustion engine (1), wherein the numerical measured values (28) are representative of an oil quality of an engine oil of the internal combustion engine (1), **characterized in that** an oil sampling interval is adapted depending on at least one numerical measured value (28) and/or a variable derived therefrom.

2. The method according to claim 1, wherein an absolute value (27) of the oil quality is derived from at least one numerical measured value (28), which absolute value (28) is used for the adaptation of the oil sampling interval.

3. The method according to any of the preceding claims, wherein a plurality of numerical measured values (28) determined in time intervals and/or variables derived therefrom is used for the adaptation of the oil sampling interval.

4. The method according to any of the preceding claims, wherein a rate of change of at least two, preferably successive in a time interval, numerical measured values (28) and/or variables derived therefrom is determined.

5. The method according to the preceding claim, wherein the oil sampling interval is adapted depending on the rate of change.

6. The method according to at least one of the preceding claims, wherein at least two numerical measured values (28) measured in a specific time interval and/or variables derived therefrom are smoothed for the adaptation of the oil sampling interval, preferably by forming a mean value and/or median of the measured values.

7. The method according to at least one of the preceding claims, wherein at least two numerical measured values (28) and/or variables derived therefrom are determined at predefined times in mutually predefined time intervals and/or at defined operating conditions of the internal combustion engine (1), preferably continuously, by the at least one sensor (23).

8. The method according to at least one of the preceding claims, wherein the numerical measured values (28) and/or variables derived therefrom are recorded with a measuring frequency in a range between 0.5 Hz and 3 Hz.

9. The method according to at least one of the preceding claims, wherein an electro-chemical state variable, preferably electrical conductivity and/or permittivity, of the engine oil is measured by the at least one sensor (23), which electro-chemical state variable represents the characteristic numerical measured value (28) for the oil quality of the engine oil.

10. The method according to at least one of the preceding claims, wherein the numerical measured values (28) and/or the variables derived therefrom are compared with a defined condition (24), wherein - if the measurement signals (28) do not correspond to the condition (24) - the oil sampling interval is adapted.

11. The method according to the preceding claim, wherein an aging rate for engine oils, determined under normal conditions and/or in tests, depending on operating hours of the internal combustion engine (1) is represented by the condition (24).

12. The method according to at least one of the preceding claims, wherein the oil sampling interval is outputted in the form of a message (31) and preferably a change of the oil sampling interval is outputted in the form of a warning.

13. An internal combustion engine with at least one oil circuit (16), comprising an engine oil transported in the oil circuit (16) for the lubrication and/or cooling of the internal combustion engine (1), wherein the internal combustion engine (1) further comprises at least one sensor (23) for the recording of at least one characteristic, numerical measured value (28) for an oil quality of the engine oil and a control or regulating device (22), to which the at least one numerical measured value (28) of the at least one sensor (23) are providable, **characterized in that** the control or regulating device (22) is embodied to adapt an oil sampling interval depending on at least one numerical measured value (28) and/or a variable derived therefrom for the condition monitoring of a lubricant of the internal combustion engine (1).

14. A computer program product, comprising instructions which, during the execution of the program by a control or regulating device (22) of an internal combustion engine (1), preferably of an internal combustion engine (1) according to claim 13, cause said device to execute the method according to at least one of claims 1 to 12.

15. A data carrier signal which transmits the computer program product according to claim 14.

## Revendications

1. Procédé de surveillance d'un lubrifiant d'un moteur à combustion interne (1), dans lequel des valeurs de mesure numériques (28) sont acquises au moyen d'au moins un capteur (23) pendant une durée de fonctionnement du moteur à combustion interne (1), les valeurs de mesure numériques (28) étant représentatives d'une qualité d'huile d'une huile moteur du moteur à combustion interne (1), **caractérisé en ce qu'**un intervalle de prélèvement d'échantillons d'huile est adapté en fonction d'au moins une valeur de mesure numérique (28) et/ou d'une grandeur dérivée de celle-ci.

2. Procédé selon la revendication 1, dans lequel une valeur absolue (27) de la qualité d'huile est dérivée d'au moins une valeur de mesure numérique (28), laquelle valeur absolue (28) est utilisée pour adapter l'intervalle de prélèvement d'échantillons d'huile.

3. Procédé selon l'une des revendications précédentes, dans lequel une pluralité de valeurs de mesure numériques (28) déterminées à des intervalles de temps et/ou de grandeurs dérivées de celles-ci est utilisée pour adapter l'intervalle de prélèvement d'échantillons d'huile.

4. Procédé selon l'une des revendications précédentes, dans lequel un taux de variation d'au moins deux valeurs de mesure numériques (28), de préférence consécutives dans un intervalle de temps, et/ou de grandeurs dérivées de celles-ci est déterminé.

5. Procédé selon la revendication précédente, dans lequel l'intervalle de prélèvement d'échantillons d'huile est adapté en fonction du taux de variation.

6. Procédé selon l'une au moins des revendications précédentes, dans lequel au moins deux valeurs de mesure numériques (28) mesurées dans un intervalle de temps déterminé et/ou des grandeurs dérivées de celles-ci sont lissées, de préférence par formation d'une moyenne et/ou d'une médiane des valeurs de mesure, afin d'adapter l'intervalle de prélèvement d'échantillons d'huile.

7. Procédé selon l'une au moins des revendications précédentes, dans lequel au moins deux valeurs de mesure numériques (28) et/ou des grandeurs dérivées de celles-ci sont déterminées au moyen dudit au moins un capteur (23), à des instants prédéterminés, dans des intervalles de temps prédéterminés les uns par rapport aux autres et/ou dans des conditions de fonctionnement définies du moteur à combustion interne (1), de préférence de manière continue.

8. Procédé selon l'une au moins des revendications précédentes, dans lequel les valeurs de mesure numériques (28) et/ou des grandeurs dérivées de celles-ci sont acquises à une fréquence de mesure comprise entre 0,5 Hz et 3 Hz.

9. Procédé selon l'une au moins des revendications précédentes, dans lequel une grandeur d'état électrochimique de l'huile moteur, de préférence la conductivité électrique et/ou la permittivité, est mesurée par ledit au moins un capteur (23), ladite grandeur d'état électrochimique constituant la valeur de mesure numérique (28) caractéristique de la qualité d'huile de l'huile moteur.

10. Procédé selon l'une au moins des revendications précédentes, dans lequel les valeurs de mesure numériques (28) et/ou les grandeurs dérivées de celles-ci sont comparées à une condition définie (24), et, lorsque les signaux de mesure (28) ne satisfont pas à la condition (24), l'intervalle de prélèvement d'échantillons d'huile est adapté.

11. Procédé selon la revendication précédente, dans lequel la condition (24) représente un taux de vieillissement des huiles moteur déterminé dans des conditions normales et/ou au cours d'essais en fonction des heures de fonctionnement du moteur à combustion interne (1).

12. Procédé selon l'une au moins des revendications précédentes, dans lequel l'intervalle de prélèvement d'échantillons d'huile est émis sous la forme d'un message (31) et une modification de l'intervalle de prélèvement d'échantillons d'huile est de préférence émise sous la forme d'un avertissement.

13. Moteur à combustion interne comportant au moins un circuit d'huile (16), comprenant une huile moteur transportée dans le circuit d'huile (16) pour la lubrification et/ou le refroidissement du moteur à combustion interne (1), le moteur à combustion interne (1) comprenant en outre au moins un capteur (23) destiné à acquérir au moins une valeur de mesure numérique (28) caractéristique d'une qualité d'huile de l'huile moteur, ainsi qu'un dispositif de commande ou de régulation (22), auquel ladite au moins une valeur de mesure numérique (28) dudit au moins un capteur (23) peut être fournie, **caractérisé en ce que** le dispositif de commande ou de régulation (22) est conçu pour adapter, en vue de la surveillance de l'état d'un lubrifiant du moteur à combustion interne (1), un intervalle de prélèvement d'échantillons d'huile en fonction d'au moins une valeur de mesure numérique (28) et/ou d'une grandeur dérivée de celle-ci.

14. Produit de programme d'ordinateur, comprenant des instructions qui, lors de l'exécution du programme par un dispositif de commande ou de régulation (22) d'un moteur à combustion interne (1), de préférence d'un moteur à combustion interne (1) selon la revendication 13, amènent celui-ci à exécuter le procédé selon l'une quelconque des revendications 1 à 12.

15. Signal de support de données, transmettant le produit de programme d'ordinateur selon la revendication 14.
